# EUROPEAN PATENT APPLICATION

(11) **EP 4 270 597 A1**
(43) Date of publication of application: **01.11.2023**
(21) Application number: 21961768.5
(22) Date of filing: 27.10.2021
(51) Int. Cl.: H01M 10/613, H01M 50/249, H01M 10/625, H01M 50/242, H01M 50/207

(54) **BATTERY, ELECTRIC DEVICE, AND METHOD FOR MANUFACTURING BATTERY**

(71) Applicant: Contemporary Amperex Technology Co., Limited, Ningde, Fujian 352100 (CN)
(72) Inventor: WANG, Zhi, Ningde, Fujian 352100 (CN); QIN, Feng, Ningde, Fujian 352100 (CN)
(74) Representative: Gong, Jinping
(86) International application number: PCT/CN2021/126831
(87) International publication number: WO 2023/070399

(57) **Abstract**

This application provides a battery, an electric apparatus, and a manufacturing method of battery. The battery provided in embodiments of this application includes: battery units, the plurality of battery units being arranged in parallel in one layer or a plurality of layers; a plate disposed on one side of one layer of the plurality of battery units; and a protective cover, the protective cover having a top wall and two side walls disposed at two ends of the top wall and connected to the top wall, and the protective cover fixing at least one of the battery units each separately onto the plate. The embodiments of this application can achieve the following effects: the battery units are protected, and meanwhile ejections generated in thermal runaway of the battery units are confined within a limited space so as to prevent adverse effects such as impacts of the ejections on adjacent battery units, thereby improving safety of the battery and even the electric apparatus.

## Description

### TECHNICAL FIELD

This application relates to the field of battery technologies, and in particular, to a battery, an electric apparatus including such battery, and a manufacturing method of battery.

### BACKGROUND

Energy conservation and emission reduction are crucial to sustainable development of the automobile industry. In this context, electric vehicles, with their advantages in energy conservation and emission reduction, have become an important part of sustainable development of the automobile industry. For electric vehicles, battery technologies are an important factor in connection with their development.

In the development of battery technologies, in addition to performance improvement, safety of the batteries is another non-negligible issue. A battery cannot be used if its safety cannot be guaranteed. Therefore, how safety performance of batteries is enhanced is an urgent technical problem to be solved in battery technologies.

### SUMMARY

This application is accomplished in view of the foregoing technical problem. One objective of this application is to provide a battery for improving safety during thermal runaway of a battery unit, an electric apparatus including such battery, and a manufacturing method of battery.

Another objective of this application is to provide a battery capable of simplifying a structure of a battery module, an electric apparatus including such battery, and a manufacturing method of battery.

Still another objective of this application is to provide a battery capable of enhancing overall strength of a battery box for accommodating the battery, an electric apparatus including such battery, and a manufacturing method of battery.

To achieve the foregoing objectives, a first aspect of this application provides a battery, characterized in that the battery includes battery units, a plate, and a protective cover, where the plurality of battery units are arranged in parallel in one layer or a plurality of layers; the plate is disposed on one side of one layer of the plurality of battery units; and the protective cover has a top wall and two side walls disposed at two ends of the top wall and connected to the top wall, and the protective cover fixes at least one of the battery units each separately onto the plate.

As such, the battery units are disposed in a limited space enclosed by the protective cover and the plate, so that the battery units in the space can be effectively protected, and ejections generated in thermal runaway of a battery unit can be confined within the limited space so as to avoid the risk of thermal runaway of more batteries, thereby improving safety of the battery units in thermal runaway.

In addition, no glue filling process such as injection of a binder is required. Therefore, a manufacturing process is simplified, and complex manufacturing devices for the glue filling process are not required, thereby reducing manufacturing costs. Moreover, the battery formed has a simpler structure.

Besides, by combination of the protective cover and the plate, overall strength of a battery box for accommodating the battery can be enhanced.

In any embodiment, the plurality of battery units are arranged in two layers, and the plate is disposed between the two layers in which the plurality of battery units are arranged.

The two layers of battery units being arranged with the plate sandwiched therebetween can make effective use of the plate and space in the box, so that the battery units can be arranged more compactly, implementing a compact overall structure of the battery, thereby increasing energy density of the battery.

In any embodiment, the plate is formed as a flat or corrugated plate.

If a flat plate is used, advantages of simple manufacturing and high production efficiency are achieved; and if a corrugated plate is used, advantages such as larger contact area and stable positioning of the plate with the battery units, especially with cylindrical batteries, are achieved.

In any embodiment, the plate is a cooling plate.

The cooling plate is used as the plate for arranging the battery, so the battery can be effectively cooled. Especially when a corrugated cooling plate is used, the cooling effect can be further improved, thereby improving the safety of the battery units and the battery. In addition, space utilization in the battery box can also be improved.

In any embodiment, the protective cover is fixed to the plate by the binder.

In this way, a reliable connection between the protective cover and the plate can be ensured. Moreover, a gap at a joint between the protective cover and the plate can be sealed by the binder, preventing gas produced due to thermal runaway from diffusing to the adjacent protective cover.

In any embodiment, the side wall of the protective cover is disposed between adjacent ones of the battery units in one layer, and an end portion of the side wall on the plate side is bonded to the plate by a binder.

The side wall of the protective cover being disposed between adjacent ones of the battery units in one layer allows the battery units to be separately covered by the respective protective covers, so that reliable protection is provided for each battery unit, and even when a battery unit undergoes thermal runaway, a battery adjacent thereto is not affected. In addition, the end portion of the side wall of the protective cover is bonded to the plate by the binder, so that adhesive fixation is achieved, and meanwhile the gap between the protective cover and the plate is sealed by the binder, preventing gas produced due to thermal runaway from running between the adjacent protective covers, thereby truly avoiding thermal runaway diffusion.

In any embodiment, the side wall of the protective cover is disposed between adjacent ones of the battery units in one layer, and the side wall of the protective cover is bonded to the adjacent battery units.

The side wall of the protective cover being disposed between adjacent ones of the battery units in one layer allows the battery units to be separately covered by the respective protective covers, so that reliable protection is provided for each battery unit, and even when a battery unit undergoes thermal runaway, a battery unit adjacent thereto is not affected. In addition, the side wall of the protective cover being bonded to the adj acent battery units can enhance fixation strength of the protective cover, thereby enhancing the strength of the overall battery box.

In any embodiment, the top wall of the protective cover is formed as a flat plate, or a curved surface protruding away from the plate.

Use of the protective cover with the top wall being a flat plate is conducive to reducing size of the battery and the battery box. The use of the protective cover with the top wall being a curved surface mentioned above can expand an internal space of the protective cover, thereby providing larger exhaust space for a battery unit that undergoes thermal runaway in the protective cover.

In any embodiment, the protective cover is disposed in such a way that a gap is left between the top wall of the protective cover and the battery unit surrounded by the protective cover.

Because a gap is left between the top wall of the protective cover and the battery unit surrounded by the protective cover, larger exhaust space can be provided for a battery unit that undergoes thermal runaway in the protective cover.

In any embodiment, the protective cover is disposded in such a way that the top wall of the protective cover is in contact with the battery unit surrounded by the protective cover.

Because the top wall of the protective cover is in contact with the battery unit surrounded by the protective cover, the strength of the protective cover can be enhanced, and thus the overall strength of the battery can be enhanced.

In any embodiment, the top wall of the protective cover is provided with a weak portion enabling a space enclosed by the protective cover and the plate to be opened under the action of pressure from inside the space.

Because the top wall of the protective cover is provided with the weak portion enabling a space enclosed by the protective cover and the plate to be opened under the action of pressure from inside the space, the inside and outside of the protective cover communicates with each other under the condition that gas produced due to thermal runaway of an electrode covered by the protective cover is exhausted and accumulated to some extent in the space of the protective cover, thereby releasing gas pressure in the protective cover so as to avoid worse adverse situations.

In any embodiment, the weak portion includes an indentation.

In this way, the weak portion can be formed with a simple structure.

In any embodiment, the indentation includes at least one of a linear indentation, a crossed indentation, and a U-shaped indentation.

In this way, the indentation can be formed in a simple manner.

In any embodiment, the protective cover is made of at least one of a mica plate, aerogel, and plastic.

In this way, the protective cover with at least one of properties of low weight, thinness, high strength, high temperature resistance, and excellent insulation performance can be formed.

A second aspect of this application provides an electric apparatus including the battery described in any embodiment according to the first aspect.

In this way, an electric apparatus with good safety can be provided.

A third aspect of this application provides a manufacturing method of battery. The manufacturing method includes: providing battery units, the plurality of battery units being arranged in parallel in one layer or a plurality of layers; providing a plate, the plate being disposed on one side of one layer of the plurality of battery units; and providing a protective cover, the protective cover having a top wall and two side walls disposed at two ends of the top wall and connected to the top wall, and the protective cover fixing at least one of the battery units each separately onto the plate.

In this way, a battery with good safety in case of thermal runaway can be manufactured. In addition, no glue filling process such as injection of a binder between the battery units is required. Therefore, the manufacturing process and manufacturing devices are simple, and situations such as poor heat insulation caused by decomposition of material of the binder can be avoided as well.

This application provides a battery capable of implementing one of the following effects, an electric apparatus including such battery, and a manufacturing method of battery.

While the battery units are protected, ejections generated in thermal runaway of a battery unit are confined within a limited space so as to prevent adverse impacts of the ejections on adjacent battery units and the like, thereby improving the safety of the battery and even the electric apparatus.

No glue filling process such as injection of a binder is required. Therefore, the manufacturing process and manufacturing devices are simple, and the structure of a battery module can be simplified.

By combination of the protective cover and the plate, overall strength of a battery box for accommodating the battery can be enhanced, and situations such as poor heat insulation caused by decomposition of material of the binder are avoided.

### BRIEF DESCRIPTION OF DRAWINGS

FIG. 1 is a schematic structural diagram of a vehicle according to an embodiment of this application.
FIG. 2 is a schematic three-dimensional diagram of a battery box according to an embodiment of this application.
FIG. 3 is a schematic three-dimensional exploded diagram of a battery box according to an embodiment of this application.
FIG. 4 is a cross-sectional view along line A-A of FIG. 1.
FIG. 5 is a schematic enlarged view of part B in FIG. 3.
FIG. 6 is a schematic three-dimensional diagram of a protective cover according to an embodiment of this application.
FIG. 7 is a schematic three-dimensional diagram of a protective cover according to another embodiment of this application.
FIG. 8 is a schematic outline diagram of a protective cover according to another embodiment of this application.

### Reference signs:

1. vehicle; 10. battery; 11. controller; 12. motor;
21. battery unit; 30. box; 301. first portion; 302. second portion;
210, 210'. protective cover; 211, 211'. side wall; 212, 212'. top wall;
213. weak portion; 214. adhesion fixing portion of protective cover and plate;
215. plate; and S. space.

### DESCRIPTION OF EMBODIMENTS

The following describes in detail specific embodiments of this application with reference to the accompanying drawings. The accompanying drawings are merely intended to illustrate the preferred embodiments and shall not be construed as any limitation on this application. In all the accompanying drawings, same parts or elements are indicated by same reference signs.

Persons of ordinary skill in the art can clearly understand advantages and benefits of this application by reading the detailed description of the embodiments below. The following embodiments are merely used to describe the technical solutions of this application more clearly, and therefore are exemplary and do not constitute any limitation on the protection scope of this application.

It should be noted that, unless otherwise stated, the technical terms or scientific terms used in this specification should be the usual meanings understood by persons skilled in the art to which the embodiments of this application belong.

In the description of the embodiments of this application, the orientations or positional relationships indicated by the terms "center", "longitudinal", "transverse", "length", "width", "thickness", "upper", "lower", "front", "rear", "left", "right", "top", "bottom", "inside", "outside", and the like are based on the orientations or positional relationships shown in the accompanying drawings. These terms are merely for the ease and brevity of description of the embodiments of this application rather than indicating or implying that the apparatuses or components mentioned must have specific orientations or must be constructed and manipulated according to specific orientations, and therefore shall not be construed as any limitations on the embodiments of this application.

In addition, in the description of the embodiments of this application, "a plurality of" means at least two unless otherwise specifically defined.

In the description of the embodiments of this application, unless otherwise specified and defined explicitly, the technical terms "mount", "connect", "join", "fasten", and the like should be understood in their general senses. For example, they may refer to a fixed connection, a detachable connection, or an integral connection; a mechanical connection or an electrical connection; and a direct connection, an indirect connection via an intermediate medium, or an interaction between two elements. Persons of ordinary skill in the art can understand specific meanings of these terms in the embodiments of this application as appropriate to specific situations.

In the description of the embodiments of this application, unless otherwise specified and defined explicitly, that a first feature is "above" or "below" a second feature means that the first and second features are in direct contact or in contact via an intermediate medium. Moreover, that the first feature is "on", "over", or "on top of" the second feature means that the first feature is directly or obliquely above the second feature, or only means that the first feature is higher than the second feature in the horizontal direction. That the first feature is "under", "below", or "beneath" the second feature means that the first feature is directly or obliquely below the second feature, or only means that the first feature is lower than the second feature in the horizontal direction.

Manufacturing of batteries such as secondary batteries includes a grouping procedure for making a plurality of battery units into a battery. At present, for example, cylindrical battery units with tabs extending out of two ends are typically grouped in a way like the following: tabs of several battery units are connected head to tail in series to form multiple columns of battery units; the multiple columns of battery units are interconnected in parallel to form a layer of battery units arranged in multiple columns and rows; and the multiple layers of battery units may be stacked to form a battery meeting energy and power requirements. The arrayed multiple layers of battery units are separated and supported by supporting plates in each layer. Generally, plate parts of the supporting plates also have thermal management functions such as cooling or heating.

In the structure of such battery, after the battery units are bonded to two side surfaces of a corrugated plate such as a water cooling plate and arranged, a binder is injected (also referred to as glue filling), for position fixation, between adjacent ones of the battery units in each row. Meanwhile, a region with no binder (also referred to as a blank region with no glue filled) is reserved on a side surface of the battery unit away from where the battery unit abuts against the plate. In this way, for example, when a cylindrical battery unit undergoes thermal runaway, with the blank region reserved on the side surface of the battery unit, the battery unit is not constrained by the binder or the like, and therefore bursts from the blank region to exhaust gas.

However, the binder being injected for forming a group in such manner has the following problems. The battery units being grouped by a binder injection process (glue filling process) leads to complex structure and high costs of the battery.

In addition, when the battery unit bursts to exhaust gas, ejections ejected from the inside of the battery unit through the blank region of the battery unit may scatter or be rebounded to the adjacent battery units, resulting in the risk of thermal runaway of more battery units.

Moreover, binder and other colloidal materials have the risk of being decomposed under high temperature. Therefore, it is possible that reliable heat insulation cannot be provided between adjacent battery units due to decomposition of the binder.

In view of the foregoing various problems, the inventors of this application have found through research that when batteries are to be grouped, a protective cover instead of a glue filling process being used to prevent thermal runaway can effectively avoid the foregoing defects in the prior art, thereby significantly improving safety of the batteries (especially the safety in occurrence of thermal runaway).

The battery involved in this application may be any battery, for example, a battery module and a battery pack, or a primary battery and secondary battery. For example, the secondary battery includes a nickel metal hydride battery, a nickel-cadmium battery, a lead-acid (or lead storage) battery, a lithium-ion battery, a sodium-ion battery, a polymer battery, and the like. Such battery is applicable to various electric devices that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships. The battery is used to supply electrical energy to these electric devices.

It should be understood that the technical solutions described in the embodiments of this application are not only applicable to the batteries and electric devices described above, but also applicable to all batteries and electric devices using batteries. However, for brevity of description, in the following embodiments, the electric vehicle is used as an example for description. Apparently, the application scenarios for the batteries involved in the embodiments of this application and the electric devices involved in the embodiments of this application are neither limited to electric vehicles.

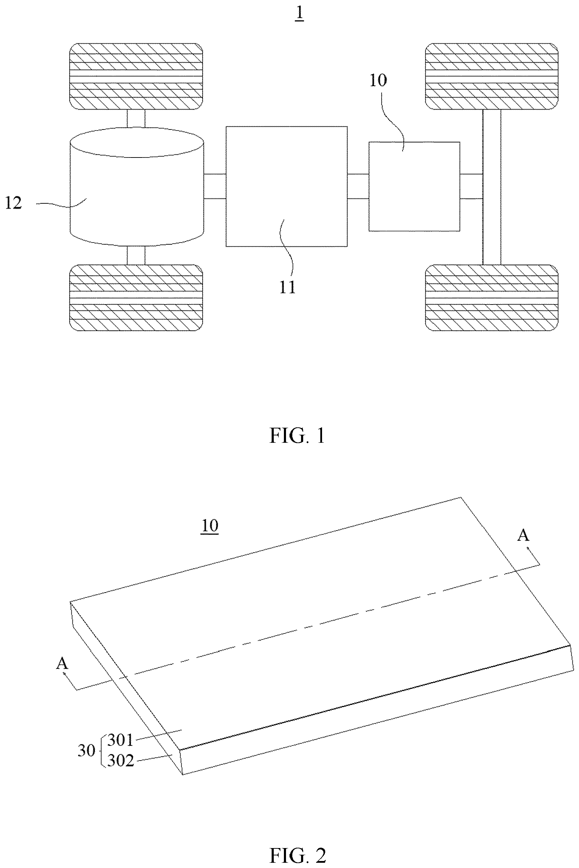

FIG. 1 is a schematic structural diagram of a vehicle 1 according to an embodiment of this application. As shown in FIG. 1, the vehicle 1 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1 is provided with a battery 10 inside, where the battery 10 may be disposed at the bottom, front, or rear of the vehicle 1. The battery 10 may be configured to supply power to the vehicle 1. For example, the battery 10 may be used as an operational power source for the vehicle 1. The vehicle 1 may further include a controller 11 and a motor 12, where the controller 11 is configured to control the battery 10 to supply power to the motor 12, for example, to satisfy power needs for start, navigation, and driving of the vehicle 1.

In some embodiments of this application, the battery 10 can be used as not only the operational power source for the vehicle 1 but also a driving power source for the vehicle 1, replacing or partially replacing fossil fuel or natural gas to provide driving traction for the vehicle 1.

To meet different requirements for power use, the battery 10 may include a plurality of battery units 21. A battery unit 21 is a smallest element constituting a battery module or a battery pack. The plurality of battery units 21 can be connected in series and/or in parallel through an electrode terminal for various application scenarios. The battery involved in this application may include a battery module, a battery pack, or the like. The plurality of battery units 21 may be connected in series, parallel, or series-parallel, where being connected in series-parallel means a combination of series and parallel connections. The battery 10 in the embodiments of this application may be directly formed by a plurality of battery units 21, or battery modules may be formed first, and then the battery modules form a battery.

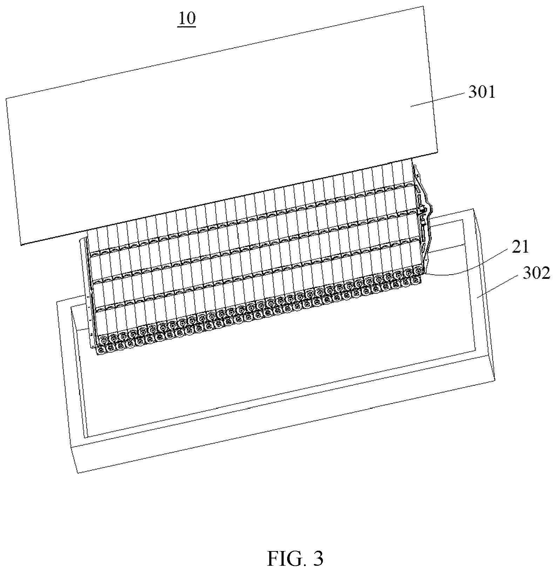

FIG. 2 and FIG. 3 schematically illustrate a structure of a battery 10 according to an embodiment of this application. As shown in FIG. 2 and FIG. 3, the battery 10 may include a box 30 and at least one battery unit 21 accommodated in the box 30. The box 30 accommodates the battery unit 21 to prevent liquid or other foreign matter from affecting charge or discharge of the battery unit 21. The box 30 may be a simple three-dimensional structure such as a separate rectangular structure, a cylindrical structure, or a spherical structure, or may be a complex three-dimensional structure formed by combination of simple three-dimensional structures such as a rectangular structure, a cylindrical structure, or a spherical structure. This is not limited in the embodiments of this application. The box 30 may be made of an alloy material such as aluminum alloy and iron alloy, a polymer material such as polycarbonate and polyisocyanurate foam, or a composite material produced from materials such as glass fibers and epoxy resin. This is not limited in the embodiments of this application either.

In some embodiments, the box 30 may include a first portion 301 and a second portion 302. The first portion 301 and the second portion 302 fit together to jointly define a space for accommodating the battery unit 21. The second portion 302 may be a box structure with one end open, and the first portion 301 may be a plate structure, where the first portion 301 covers the open side of the second portion 302 for the first portion 301 and the second portion 302 to jointly define a space for accommodating the battery unit 21. Alternatively, the first portion 301 and the second portion 302 may both be box structures with one side open, where the open side of the first portion 301 is engaged with the open side of the second portion 302.

In some embodiments, the battery unit 21 may be a lithium-ion battery, a sodium-ion battery, a magnesium-ion battery, or the like. This is not limited in the embodiments of this application. The battery unit 21 may be cylindrical, flat, rectangular, or another shape. This is not limited in the embodiments of this application either. Battery units 21 are typically classified into three types by packaging method: cylindrical battery unit, prismatic battery unit, and pouch battery unit. The type of battery is not limited in the embodiments of this application either. Cylindrical battery units may be classified into cylindrical battery unit, polygonal prismatic battery unit, and the like by section shapes of their cylindrical surfaces. However, for brevity of description, the following embodiments are all described by using a cylindrical battery unit 21 as an example.

In addition, although not particularly illustrated, the battery unit 21 in the embodiments of this application typically includes an end cover, a housing, and a cell assembly.

The end cover refers to a component that covers an opening of the housing to isolate an internal environment of the battery unit 21 from an external environment. Without limitation, a shape of the end cover may be adapted to that of the housing, so that the end cover can fit the housing. Optionally, the end cover may be made of a material with certain hardness and strength (for example, aluminum alloy), so that the end cover is less likely to deform under extrusion and collision, enabling the battery unit 21 to have higher structural strength and improved safety performance. The end cover may be provided with functional components such as an electrode terminal. The electrode terminal may be configured to be electrically connected to the cell assembly for outputting or inputting electrical energy of the battery unit 21. The end cover may also be made of various materials, for example, copper, iron, aluminum, stainless steel, aluminum alloy, and plastic. This is not particularly limited in the embodiments of this application. In some embodiments, an insulator may also be provided at an inner side of the end cover. The insulator can be configured to isolate electrical connection parts in the housing from the end cover, so as to reduce the risk of short circuit. For example, the insulator may be made of plastic, rubber, or the like.

The housing is an assembly configured to form the internal environment of the battery unit 21 together with the end cover, where the formed internal environment may be used to accommodate the cell assembly, an electrolyte (not shown in the figure), and other components. The housing and the end cover may be separate components, and an opening may be provided in the housing, so that the end cover can close the opening to form the internal environment of the battery unit. Without limitation, the end cover and the housing may also be integrated. Specifically, the end cover and the housing may form a shared connection surface before other components are disposed inside the housing, and then the end cover covers the housing when inside of the housing needs to be enclosed. The housing may be of various shapes and sizes, such as a rectangular shape, a cylindrical shape, and a hexagonal prism shape. Specifically, the shape of the housing may be determined based on a specific shape and size of the cell assembly. The housing may be made of various materials, for example, copper, iron, aluminum, stainless steel, aluminum alloy, and plastic. This is not particularly limited in the embodiments of this application. The embodiments of this application are described by using a cylindrical battery unit 21 as an example. Therefore, the housing of the battery unit 21 is, for example, cylindrical.

The cell assembly is a component in which electrochemical reactions take place in the battery unit 21. There may be one or more cell assemblies in the housing. The cell assembly is mainly formed by winding or stacking a positive electrode plate and a negative electrode plate, and a separator is generally disposed between the positive electrode plate and the negative electrode plate. The parts with active substances on the positive electrode plate and the negative electrode plate constitute a body portion of the cell assembly, and the parts with no active substances on the positive electrode plate and the negative electrode plate each constitute a tab (not shown in the figure). A positive tab and a negative tab may both be located at one end of the body portion or be located at two ends of the body portion respectively. During charge and discharge of the battery, a positive electrode active substance and a negative electrode active substance react with an electrolyte, and the tabs are connected to electrode terminals to form a current loop.

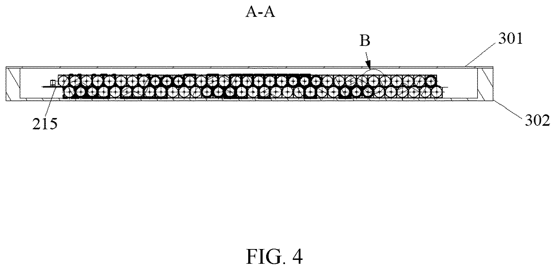

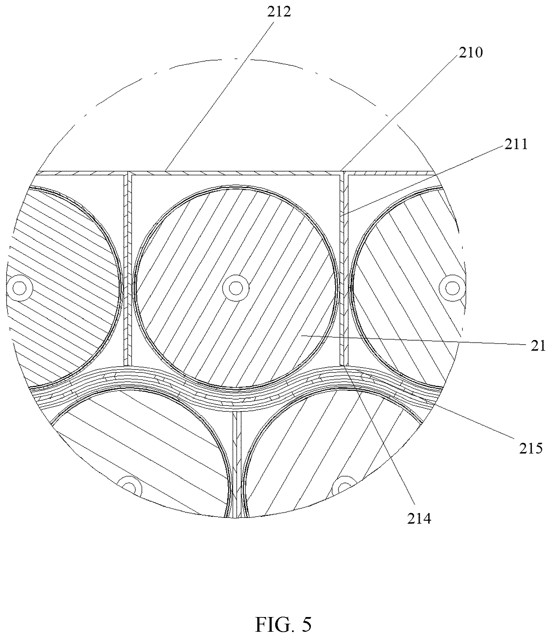

FIG. 4 is a schematic cross-sectional view of a battery 10 along line A-A, and FIG. 5 is a local schematic diagram of the battery.

As shown in FIG. 4 and FIG. 5, in some embodiments of this application, the battery 10 includes battery units 21, a plate 215 and a protective cover 210. The plurality of battery units 21 are arranged in parallel in one layer or a plurality of layers. The plate 215 is disposed on one side of one layer of the plurality of battery units 21. The protective cover 210 has a top wall 212 and two side walls 211 disposed at two ends of the top wall 212 and connected to the top wall 212, and the protective cover fixes at least one of the battery units 21 each separately onto the plate 215.

The battery unit 21 may be, for example, the cylindrical battery unit described above. These battery units 21 are arranged in a layer to be disposed on a side surface of the plate 215. As shown in FIG. 3 to FIG. 5, these battery units 21 are, for example, arranged adjacent to each other on one surface of the plate 215 in such a way that axial directions of the cylinders are approximately parallel to each other. In a specific embodiment, the plurality of battery units 21 are arranged in a layer, and may be located on any single side surface of the plate 215, or each of two side surfaces of the plate 215 is provided with a layer of battery units 21. In addition, the gap between adjacent ones of the battery units 21 may be set depending on a specific situation. This is not particularly limited herein.

The plate 215 is a thin plate structure with strength enough to support the battery unit. The plate 215 may be a solid plate structure, a hollow plate structure with a cavity inside, or a plate structure provided with a cooling pipeline or cooling path; and may be a single-layer plate structure, or a multi-layer laminated plate structure. The plate 215 is made of a material that is not particularly limited, for example, may be made of metal. In addition, the plate may be a plate component that is particularly provided for fixing the protective cover 210. Alternatively, a cooling plate (for example, a water cooling plate) can also serve as the plate 215. Certainly, another plate structure can serve as the plate 215 described herein. It should be noted that it is not appropriate to use a plate component of an outer box for the battery as the plate 215. The shape of the plate is not particularly limited, provided that the battery units can be arranged on the plate and the protective cover 210 can be fastened. For example, the plate may be a flat plate, a corrugated plate, or another shape, which can be approximately set depending on the shape of the battery units to be placed.

The protective cover 210 includes two side walls 211 and a top wall 212 that connects end portions of the two side walls 211. The two side walls 211 are separately arranged between adjacent ones of the battery units 21 in one layer so as to separate the battery units 21. In this way, the battery unit 21 in a space enclosed by the two side walls 11, the top wall 212 and the plate 215 is located in a relatively independent limited space.

A correspondence between the protective cover 210 and the battery units 21 may be appropriately set depending on a specific situation. For example, one protective cover 210 may be provided for one battery unit 21, or one protective cover 210 may be provided for a plurality of battery units 21.

Under the condition that one protective cover 210 is provided for one battery unit 21, reliable protection can be provided for each battery unit 21. Thermal runaway of any battery unit 21 is unlikely to cause further thermal runaway of another battery, reliably avoiding adverse effects on other battery units 21 in normal operation. In addition, the protective covers 210 designed for the battery units 21 are universal, facilitating batch production. In addition, the protective covers 210 may also be connected to each other to form an integrated structure.

In the foregoing embodiment, the battery units 21 are separated and confined in a relatively independent limited space S by the protective covers 210. Therefore, the battery units 21 are protected, and meanwhile ejections generated in thermal runaway of a battery unit 21 can be confined within the limited space, effectively avoiding adverse effects such as impacts of the ejections on the adjacent battery units 21.

In some embodiments of this application, as shown in FIG. 3 and FIG. 4, the plurality of battery units 21 are arranged in two layers, and the plate 215 is disposed between the two layers where the plurality of battery units 21 are arranged. The two layers of battery units 21 being arranged with the plate 215 sandwiched therebetween can make effective use of the plate 215 (reducing space occupied by the plate) and space inside the box 30, so that the battery units 21 can be arranged more compactly, implementing a compact overall structure of the battery, thereby increasing energy density of the battery.

In an example, when a plurality of battery units 21 formed in this way are accommodated in the box 30, as shown in FIG. 3, two side surfaces of the plate 215 may each be provided with a plurality of battery units 21 arranged in n row × m column (n and m are both integers greater than 1 and may be equal or unequal to each other). In this way, the space utilization of the box 30 can be further improved, facilitating improvement of arrangement efficiency for the battery.

In some embodiments of this application, the plate 215 is formed as a flat or corrugated plate.

If a flat plate 215 is used, advantages of simple manufacturing and high production efficiency are achieved. If a corrugated plate 215 is used, for cylindrical battery units such as a cylindrical battery, the plate 215 has advantages such as larger contact area and stable positioning. Therefore, the corrugated plate 215 is preferable from the perspective of improving cooling efficiency and facilitating compact arrangement.

In some embodiments of this application, the plate 215 is a cooling plate.

A cooling plate (such as a water cooling plate) also serving as the plate 215 can further save the space in the battery box 30, thereby simplifying the structure of the battery.

In some embodiments of this application, the protective cover 210 is fixed to the plate 215 by a binder.

A fixing manner of the protective cover 210 on the plate 215 can be freely set provided that reliable fixation of the protective cover 210 with respective to the plate 215 is ensured. However, from the perspective of improving airtightness of the connection and fixation, it is preferable to use a binder to fix the protective cover 210 to the plate 210. The binder is not particularly limited, provided that the protective cover 210 is reliably connected to the plate 215.

As such, reliable connection between the protective cover 210 and the plate 215 can be ensured by the binder. In addition, a gap at a joint of the protective cover 210 and the plate 215 can be sealed by the binder, preventing gas produced in thermal runaway from diffusing to an adjacent protective cover 210.

In some embodiments of this application, the side wall 211 of the protective cover 210 is disposed between adjacent ones of the battery units 21 in one layer, and an end portion of the side wall 211 on the plate side 215 is bonded to the plate 215 by a binder.

Specifically, as shown in FIG. 5, at an adhesion fixing portion 214 of protective cover and plate, the protective cover 210 is fixed to the plate 215 along the side wall 211 by a binder or the like, therefore adhesion fixation is ensured, and meanwhile a gap between the side wall 211 and the plate 215 is reliably sealed. In this way, thermal runaway of a battery unit 21 is prevented from transversely spreading to an adjacent protective cover 210 via the gap between the side wall 211 and the plate 215, further improving protection reliability.

In some embodiments of this application, the side wall 211 of the protective cover 210 is disposed between adjacent ones of the battery units 21 in one layer, and the side wall 211 of the protective cover 210 is bonded to the adjacent battery unit 21.

Specifically, the side wall 211 of the protective cover 210 being disposed between adjacent ones of the battery units 21 in one layer allows the battery units 21 to be separately covered by the respective protective covers 210, so that reliable protection can be provided for each battery unit 21, and even when a battery unit 21 undergoes thermal runaway, a battery unit 21 adjacent thereto is not affected. In addition, the protective cover 210 is designed in such a way that the end portion of each side wall 211 on the plate side 215 is bonded to the plate 215 by a binder. Meanwhile, each side wall 211 is further bonded to the adjacent battery unit 21. In this way, the fixation strength of the protective cover and the overall strength of the box 30 can be further enhanced.

In some embodiments of this application, the top wall 212 of the protective cover 210 is formed as a flat plate, or a curved surface protruding away from the plate 215.

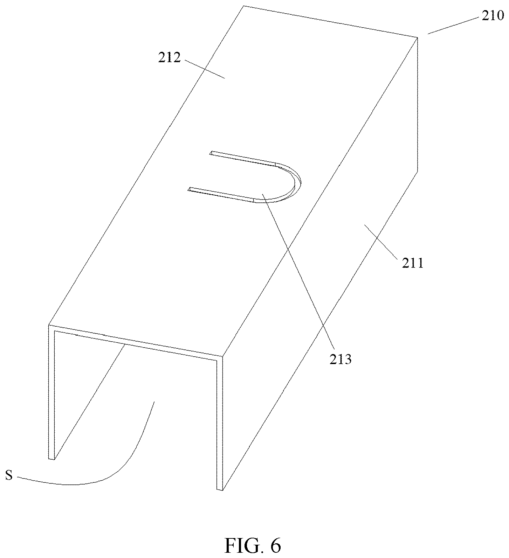

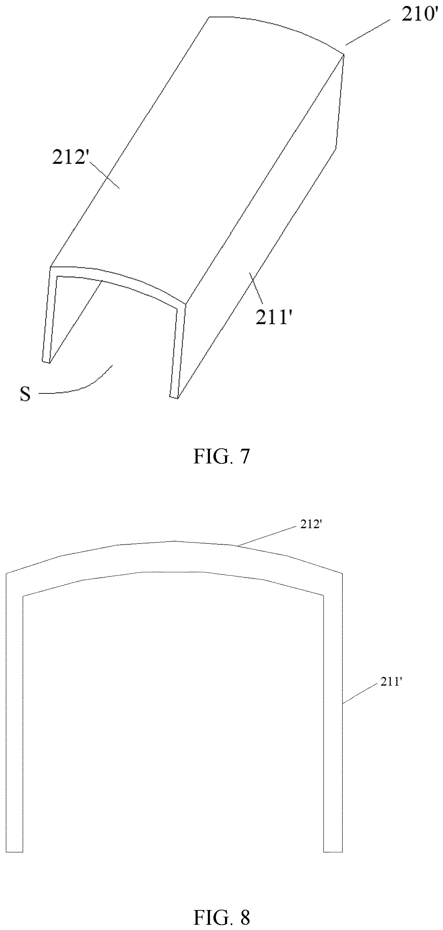

Specifically, in a specific embodiment as shown in FIG. 5 to FIG. 8, for the shape of the protective cover, the top wall 212 of the protective cover 210 is a flat plate (as shown in FIG. 5 and FIG. 6), that is, the entire protective cover 210 is in a shape of a channel with a portal cross section. In another specific embodiment, the top wall 212' of the protective cover 210' is formed as a curved surface (as shown in FIG. 7 and FIG. 8) protruding away from the plate 215, meaning that the overall protective cover 210' is in a shape of a channel with a reversed U-shaped cross section.

As shown in FIG. 5 and FIG. 6, the top wall 212 of the protective cover 210 being formed as a flat plate is conducive to reducing thickness (which is in the vertical direction in FIG. 4 and FIG. 5) of the battery and even the box 30. As shown in FIG. 7 and FIG. 8, under the condition that the top wall 212' of the protective cover 210' is formed as a bulging curved surface, larger exhaust space can be provided for the battery unit 21 that undergoes thermal runaway in the protective cover 210'.

In some embodiments of this application, the protective covers 210, 210' are disposded in such a way that gaps are left between the top walls 212, 212' of the protective covers 210, 210' and the battery units 21 surrounded by the protective covers 210, 210'.

Because gaps are left between the top walls 212, 212' of the protective covers 210, 210' and the battery units 21 surrounded by the protective covers 210, 210', larger exhaust space can be provided for a battery unit that undergoes thermal runaway in the protective cover.

In some other embodiments of this application, the protective covers 210, 210' are disposded in such a way that the top walls 212, 212' of the protective covers 210, 210' are in contact with the battery units 21 surrounded by the protective covers 210, 210'.

Because the top walls 212, 212' of the protective covers 210, 210' are in contact with the battery units 21 surrounded by the protective covers 210, 210', the strength of the protective cover can be enhanced, and thus the overall strength of the battery can be enhanced.

In addition, the top walls 212, 212' of the protective covers 210, 210' can be arranged in contact with the battery units 21 surrounded by the protective covers, or alternatively disposded in such a way that gaps are left between the top walls 212, 212' and the battery units 21 surrounded by the protective covers, which can be appropriately arranged depending on a specific situation. However, from the perspective of providing larger exhaust space for a battery unit 21 that undergoes thermal runaway in the protective cover 210', it is preferable to arrange the top walls 212, 212' of the protective covers 210, 210' in the way that gaps are left between the top walls 212, 212' and the battery units 21 surrounded by the protective covers 210, 210'.

In some embodiments of this application, the top walls 212, 212' of the protective covers 210, 210' are each provided with a weak portion 213 enabling a space enclosed by the protective covers 210, 210' and the plate 215 to be opened under the action of pressure from inside the space.

The weak portions refer to portions lower than other positions on the top walls 212, 212' of the protective covers 210, 210'. The weak portion may be formed by reducing the thickness, or by providing an opening and a cover component for sealing the opening.

With the weak portion 213 provided, under the condition that gas is exhausted due to thermal runaway of a battery unit in the protective cover, an internal space of the protective cover is enabled to communicate with the outside in time to release the exhausted gas, thereby avoiding occurrence of more adverse situations. Although the gas in the protective cover or thermal ejections of the battery unit 21 overflow out of the protective cover through the weak portion 213, the other battery units 21 in normal operation are all located inside the protective cover, and therefore are not adversely affected by the battery unit 21 that undergoes thermal runaway.

In some embodiments of this application, the weak portion 213 includes an indentation.

Specifically, the weak portion 213 may be formed by an indentation. The indentation refers to a weak connection portion formed by reducing local thickness of the top wall of the protective cover to reduce connection strength of this local position. The method for reducing local thickness is not limited, and any known method can be used.

In some embodiments of this application, the indentation includes at least one of a linear indentation, a crossed indentation, and a U-shaped indentation.

Specifically, for the shape, the indentation may be a linear indentation, a crossed indentation, a U-shaped indentation, or the like.

In a specific example shown in FIG. 6, the indentation is formed in a U shape. Under the condition that pressure of internal gas in the protective cover 210 is higher than a breaking strength of the U-shaped indentation due to thermal runaway of the battery unit 21 covered by the protective cover 210, the top wall 212 of the protective cover 210 is locally broken with the U-shaped indentation as a weak point. In this way, the internal space of the protective cover 210 communicates with the outside to quickly release the gas accumulated in the protective cover 210.

The form of the weak portion 213, the shape of the indentation, and the like are not limited, provided that the internal space of the protective cover is open to the outside under the action of pressure of the internal gas. It should be noted that under the condition that the top wall of the protective cover is arranged in contact with the battery unit 21 covered by the protective cover, the indentation may be arranged at a position avoiding the contact position, and a specific position may be specifically set depending on a situation.

In some embodiments of this application, the protective cover is made of at least one of a mica plate, aerogel, and plastic.

The protective cover may be made of, for example, a mica plate, aerogel, and plastic. As such, a protective cover with at least one of the properties such as lightness, thinness, high strength, high temperature resistance, and excellent insulation performance can be formed.

On the basis of the foregoing description, an embodiment of this application provides a battery. The battery includes: battery units 21, the plurality of battery units 21 being arranged in parallel in one layer or a plurality of layers; a plate 215, the plate 215 being disposed on one side of one layer of the plurality of battery units 21; and a protective cover 210 or 210', the protective cover 210 or 210' having a top wall 212 and two side walls 211 disposed at two ends of the top wall 212 and connected to the top wall 212, and the protective cover 210 or 210' fixing at least one of the battery units 211 each separately onto the plate 215.

According to the foregoing embodiment of this application, the battery units are confined in a relatively independent limited space by combination of the protective cover and the plate. Therefore, the battery units are protected, and meanwhile ejections generated in thermal runaway of a battery unit can be confined within the limited space, effectively avoiding adverse effects such as impacts of the ejections on the adjacent battery units.

In addition, no glue filling process such as injection of a binder is required. Therefore, a manufacturing process and manufacturing devices are simple, and the structure of a battery module can be simplified. Moreover, situations such as poor heat insulation caused by decomposition of material of the binder can also be avoided.

Besides, by combination of the protective cover and the plate, the overall strength of a battery box for accommodating the battery can be enhanced.

According to another aspect, an embodiment of this application provides an electric apparatus including the battery described in the foregoing embodiments of this application.

Therefore, an electric apparatus with good safety can be provided.

An embodiment of this application further provides a manufacturing method of battery. The manufacturing method includes: providing battery units 21, the plurality of battery units being arranged in parallel in one layer or a plurality of layers; providing a plate 215, the plate 215 being disposed on one side of one layer of the plurality of battery units 21; and providing a protective cover 210 or 210', the protective cover 210 or 210' having a top wall 212 and two side walls 211 disposed at two ends of the top wall 212 and connected to the top wall 212, and the protective cover 210 or 210' fixing at least one of the battery units 21 each separately onto the plate 215.

In this way, a battery with good safety in case of thermal runaway can be manufactured. In addition, no glue filling process such as injection of a binder between the battery units is required. Therefore, a manufacturing process and manufacturing devices are simple, and situations such as poor heat insulation caused by decomposition of material of the binder can be avoided as well.

As an example, the following describes specific embodiments of this application.

As shown in FIG. 3 to FIG. 6, in the battery box 30, two side surfaces of a water cooling plate used as the plate 215 are each provided with a layer of orderly-arranged battery units 21. In each layer, the battery units 21 are arranged adjacent to each other in multiple columns in such a way that their respective axial directions are approximately (approximately means that errors within a specified range are allowed) parallel to each other, so as to form battery unit arrays in n row × m column (n and m are both integers greater than 1, and may be equal or unequal to each other).

Each battery unit 21 is provided with a protective cover 210. The protective cover 210 includes a flat plate top wall 212 and two upright side walls 211 that are respectively connected to two end portions of the top wall 212. Each side wall 211 is inserted between two adjacent battery units 210, and an end portion on a side of the water cooling plate is adhesively fixed to the water cooling plate by a binder. The binder is applied along an entire edge of the end portion on the side of the water cooling plate of each side wall 211, so as to seal a gap between the protective cover 210 and the water cooling plate.

In this way, each protective cover 210 forms a sealed space with the water cooling plate, and each sealed space is provided with a battery unit 21 (cylindrical battery unit) inside. A gap is left between the top wall of the protective cover 210 and the battery unit 21. The top wall 212 of the protective cover 210 is provided with a weak portion 213 formed by a U-shaped indentation. Under the condition that the battery unit 21 in the sealed space exhausts gas due to thermal runaway and the gas is accumulated to reach a pressure sufficient to push open the weak portion 213, the weak portion 213 is broken along the U-shaped indentation under the action of the internal gas pressure, thereby releasing the internal gas to the outside, and avoiding other adverse situations such as burst caused by the thermal runaway.

This embodiment differs from the foregoing embodiments in shape of the top wall of the protective cover. The following describes only the difference, and same structure or elements are labeled with the same reference signs and description thereof is omitted.

As shown in FIG. 7 and FIG. 8, the overall top wall 212' of the protective cover 210' is in a circular curved shape, meaning that the outline of the top wall 212' is as shown in FIG. 8 when observed along the axis of the cylindrical battery unit 21. Such shape of the protective cover is conducive to expanding the internal space of the protective cover 210'.

The foregoing embodiments are illustrative, and persons skilled in the art know that the foregoing constituent elements may be combined, replaced, or omitted.

The foregoing describes the embodiments of this application, but persons skilled in the art should know that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived of by persons skilled in the art, and other manners constructed by combining some of the constituent elements in the embodiments are also included in the scope of this application.

## Claims

1. A battery, **characterized by** comprising:
battery units, the plurality of battery units being arranged in parallel in one layer or a plurality of layers;
a plate disposed on one side of one layer of the plurality of battery units; and
a protective cover, the protective cover having a top wall and two side walls disposed at two ends of the top wall and connected to the top wall, and the protective cover fixing at least one of the battery units each separately onto the plate.

2. The battery according to claim 1, **characterized in that**
the plurality of battery units are arranged in two layers; and
the plate is disposed between the two layers in which the plurality of battery units are arranged.

3. The battery according to claim 1 or 2, **characterized in that**
the plate is formed as a flat or corrugated plate.

4. The battery according to any one of claims 1 to 3, **characterized in that**
the plate is a cooling plate.

5. The battery according to any one of claims 1 to 4, **characterized in that**
the protective cover is fixed to the plate by a binder.

6. The battery according to any one of claims 1 to 5, **characterized in that**
the side wall of the protective cover is disposed between adjacent ones of the battery units in one layer, wherein an end portion of the side wall on the plate side is bonded to the plate by the binder.

7. The battery according to claim 5 or 6, **characterized in that**
the side wall of the protective cover is disposed between adjacent ones of the battery units in one layer, wherein the side wall of the protective cover is bonded to the adjacent battery units.

8. The battery according to any one of claims 1 to 7, **characterized in that**
the top wall of the protective cover is formed as a flat plate, or a curved surface protruding away from the plate.

9. The battery according to claim 8, **characterized in that**
the protective cover is disposded in such a way that a gap is left between the top wall of the protective cover and the battery unit surrounded by the protective cover.

10. The battery according to claim 8, **characterized in that**
the protective cover is disposded in such a way that the top wall of the protective cover is in contact with the battery unit surrounded by the protective cover.

11. The battery according to claim 9 or 10, **characterized in that**
the top wall of the protective cover is provided with a weak portion enabling a space enclosed by the protective cover and the plate to be opened under the action of pressure from inside the space.

12. The battery according to claim 11, **characterized in that**
the weak portion comprises an indentation.

13. The battery according to claim 12, **characterized in that**
the indentation may include at least one of a linear indentation, a crossed indentation, and a U-shaped indentation.

14. The battery according to any one of claims 1 to 13, **characterized in that**
the protective cover is made of at least one of a mica plate, aerogel, and plastic.

15. An electric apparatus, **characterized by** comprising the battery according to any one of claims 1 to 14.

16. A manufacturing method of battery, **characterized by** comprising:
providing battery units, the plurality of battery units being arranged in parallel in one layer or a plurality of layers;
providing a plate, the plate being disposed on one side of one layer of the plurality of battery units; and
providing a protective cover, the protective cover having a top wall and two side walls disposed at two ends of the top wall and connected to the top wall, and the protective cover fixing at least one of the battery units each separately onto the plate.
